# EUROPÄISCHE PATENTSCHRIFT

(11) **EP 1 186 088 B1**
(45) Veröffentlichungstag und Bekanntmachung des Hinweises auf die Patenterteilung: **31.03.2004**
(21) Anmeldenummer: 00909308.9
(22) Anmeldetag: 03.03.2000
(51) Int. Cl.: H02K 3/28, H02K 1/24, H02K 1/18, F03D 9/00

(54) **WINDENERGIEANLAGE MIT EINER SYNCHRONMASCHINE**
WINDPOWER APPARATUS WITH A SYNCHRON MACHINE
DISPOSITIF DE CONVERSION D'ENERGIE EOLIENNE AVEC UNE MACHINE SYNCHRONE

(30) Priorität: 26.05.1999 DE 19923925
(43) Veröffentlichungstag der Anmeldung: 13.03.2002
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2000/001882
(87) Internationale Veröffentlichungsnummer: WO 2000/074210

(56) Entgegenhaltungen:
- WO-A-88/07782
- DE-A- 19 729 034
- US-A- 4 318 019

## Beschreibung

Synchronmaschinen sind in vielfältiger Form seit langem bekannt. Solche Synchronmaschinen erzeugen beim Generatorbetrieb als auch im Motorbetrieb im Falle eines Kurzschlusses, z.B. einem Kurzschluß an Anschlußklemmen oder auch innerhalb der Statorwicklung, sehr große Kurzschlußdrehmomente. Diese sehr großen Kurzschlußdrehmomentspitzen können hierbei Werte von bis zum sechs- bis achtfachen des Nenndrehmoments der Synchronmaschine erreichen. Dem sehr seltenen Kurzschlußfall und dem damit einhergehenden Auftreten eines sehr großen Kurzschlußdrehmoments muß daher auch bei der mechanischen Konstruktion der Synchronmaschine Rechnung getragen werden.

Synchronmaschinen der vorbeschriebenen Art werden bereits seit langem in Windenergieanlagen der Firma Enercon verwendet. Bei diesen Windenergieanlagentypen sind die Synchronmaschinen als Ringgeneratoren ausgeführt, wobei der Generatorläufer innerhalb des Generatorstators routiert und der Generatorläufer direkt am Rotor der Windenergieanlage angeflanscht ist. Bei einem direkt angeflanschten Generatorläufer an eine Antriebsmaschine stehen im Kurzschlußfall sehr hohe Kurzschlußdrehmomente und die Konstruktionen zur Vermeidung von größeren Schäden mit sehr hohen Kosten und einem sehr großen Wartungsaufwand verbunden.

Bei einer Synchronmaschine, wie sie beispielsweise bei der Windenergieanlage vom Typ E-40 der Firma Enercon eingesetzt wird, wurde deshalb eine mechanische Sicherung in Form einer Brechbolzenkupplung entwickelt und eingesetzt. Hierbei ist der sogenannte Statortragstern (Träger), der den Stator (stehenden Teil des Generators) trägt, über Brechbolzen mit dem ebenfalls feststehenden Achszapfen verbunden. Im Falle eines Generatorkurzschlusses brechen die Bolzen und erlauben ein Mitrotieren des Stators um den Achszapfen. Damit wird das übertragene Drehmoment auf das maximal Vierfache des Nenndrehmoments begrenzt und im Kurzschlußfall des Generators ist die Sicherheit des Antriebsstranges gewährleistet.

Aus der DE 197 29 034 ist eine Windenergieanlage mit einem Synchrongenerator bekannt, welcher einen Generator-Stator mit einer Statorwicklung und einen relativ zum Stator bewegbaren Generator-Läufer aufweist. In einer Ausgestaltung weist der Stator dort eine 6-Phasen-Statorwicklung auf. Die 6 Phasen des Synchrongenerators sind an eine gemeinsame Gleichrichterschaltung angeschlossen.

Aus der WO 88/07782 ist eine Windenergieanlage mit einem elektrischen Generator mit einem Rotor und einem Stator bekannt. Der Stator weist dort mehrere Windungen auf, die über geeignete Schaltmittel unterschiedlich miteinander verschaltet werden können, um ein gewünschtes Ausgangssignal zu erzeugen.

Aus der DE 40 32 492 ist eine elektrische Maschine für Stromrichterbetrieb mit einer umschaltbaren, mehrphasigen Ständerwicklung bekannt, die auch bei einer Windenergieanlage eingesetzt werden kann. Die Ständerwicklung ist dort in gleichartige, jeweils m-phasige Wicklungsteilsysteme unterteilt, die galvanisch getrennt und fest in Stern oder Polygon geschaltet sind. Zur Wicklungsumschaltung sind gesonderte Schaltelemente vorgesehen.

Es ist Aufgabe der Erfindung, die Synchronmaschine in ihrer Konstruktion zu vereinfachen und die vorgenannten Nachteile zu vermeiden.

Die Aufgabe wird erfindungsgemäß durch eine Windenergieanlage mit einer Synchronmaschine nach Anspruch 1 gelöst. Vorteilhafte Weiterbildungen sind in den weiteren Ansprüchen beschrieben.

Der Erfindung liegt die Erkenntnis zugrunde, daß besondere Sicherungselemente, wie beispielsweise eine Brechbolzenkupplung nicht notwendig ist, wenn das maximale Kurzschlußdrehmoment auf ein Bruchteil dessen begrenzt wird, was bislang üblich ist. Bevorzugt ist das Kurzschlußdrehmoment bei der erfindungsgemäßen Synchronmaschine stets kleiner als das zweifache des Drehmoments.

Zur Begrenzung des Kurzschlußdrehmoments weist der Rotor wenigstens zwei unabhängige Drehstromsysteme auf, die elektrisch voneinander isoliert sind. Somit ist die Leistung des Generators auf zwei unterschiedliche Drehstromsysteme aufgeteilt. Bei zwei unabhängigen Drehstromsystemen übemimmt jedes System nur 50% der Nennleistung. Diese Systeme können um einen Winkel von 30° verschoben werden. Somit sind beide Drehstromsysteme elektrisch und mechanisch (räumlich) isoliert. Damit ist aber auch die Reaktanz X_{d} in etwa verdoppelt und damit der Kurzschlußstrom halbiert. Dies hat den besonderen Vorteil, daß bei einem Kurzschluß in einem System nur die halbe Kurzschlußleistung auftreten kann. Somit ist eine Reduzierung des maximalen Kurzschlußmomentes (Kurzschluß von zwei Phasen, z.B. U1 und V1) um 50% zur bisher üblichen Ein-Systemanordnung möglich.

Eine weitere Maßnahme zur Reduzierung des Kurzschlußdrehmomentes ist gemäß einer Ausgestaltung der Erfindung der Verzicht auf einem Dämpferkäfig, zumal die Reaktanzen X_{d}" und X_{d}' den dynamischen Kurzschlußstromverlauf bestimmen. Durch den Verzicht auf den Dämpferkäfig, also durch den Einsatz einer Schenkelpolmaschine ohne Dämpferwicklung kann das maximale Kurzschlußdrehmoment um ca. 30% verringert werden.

Als weitere Maßnahme zur Verringerung des Drehmoments wird nach einer weiteren Ausgestaltung der Erfindung vorgeschlagen, daß die Polköpfe des Läufers in etwa pfeilförmig ausgebildet sind. Im Falle eines Kurzschlusses in einer der beiden Drehstromsysteme kann dann der magnetische Fluß im Erregerpol in Drehrichtung sehr schnell ausweichen. Damit erhält man eine weiche dynamische Entkupplung des Erregerfluß mit dem Statorfluß innerhalb einer Nut. Pro Polbreite fließt dann der Kurzschlußstrom nur in zwei von insgesamt sechs Nuten. Diese dynamische Entkupplung des Erregerflusses reduziert nochmals das Kurzschlußdrehmoment.

Die Erfindung wird nachfolgend anhand eines in Zeichnungen dargestellten Ausführungsbeispiels näher erläutert. In der Zeichnung stellen dar:
- Figur 1: Querschnitt durch eine erfindungsgemäße Windenergieanlagen-Gondel mit einem erfindungsgemäßen Synchrongenerator;
- Figur 2: Querschnitt durch eine bekannte WindenergieanlagenGondel mit einem bekannten Synchrongenerator;
- Figur 3a: Teilausriß eines erfindungsgemäßen Synchrongenerators;
- Figur 3b: Skizze der Phasenleiterverteilung;
- Figur 3c: Teilausriß eines bekannten Synchrongenerators;
- Figur 4a: Ansicht eines pfeilförmigen Polkopfes;
- Figur 4b: Aufsicht auf einen pfeilförmigen Polkopf;
- Figur 5: magnetischer Flußverlauf ohne Kurzschluß;
- Figur 6: magnetischer Flußverlauf mit Kurzschluß;
- Figur 7, 8: Meßaufnahmen im Kurzschlußfall bei Teil- oder Voll-Last.

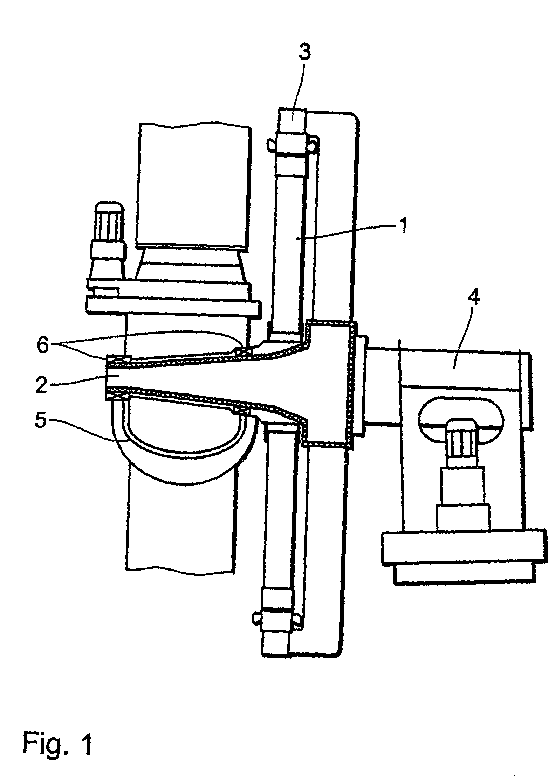

Figur 1 zeigt einen Teil einer Windenergieanlagen-Gondel mit einem Rotor 1, welcher auf einem Achszapfen 2 gelagert ist. Der Rotor 1 ist ohne Getriebe direkt mit einem Generatorläufer eines Synchrongenerators verbunden. Der Generatorläufer liegt innerhalb eines Generatorstators 3, welcher direkt am Achszapfen 2 angeflanscht ist. Der Achszapfen 2, wie der gesamte auf ihm gelagerte Antriebsstrang nebst dem Generator wird von dem Maschinenträger 4 gehalten. Außerdem sind gezeigt: Rotornabe 5, Lager 6.

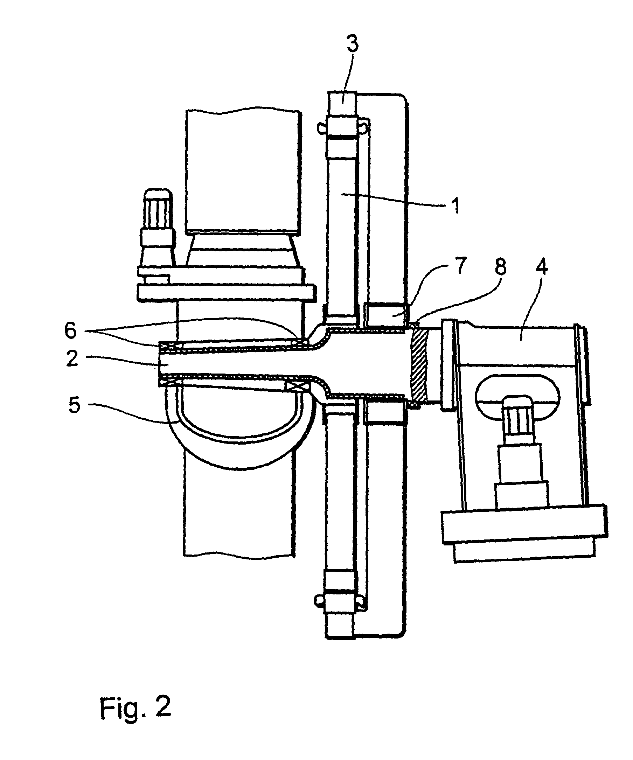

Figur 2 zeigt eine Windenergieanlagen-Gondel mit einem bekannten Synchrongenerator bei welchem der Generatorstator 1 von einem Statortragstern 7 getragen wird und der Statortragstern 7 seinerseits auf dem Achszapfen 2 liegt und mittels einer Brechbolzenkupplung 8 festgehalten wird.

Im Falle eines Kurzschlusses, z.B. an den Anschlußklemmen oder auch innerhalb der Statorwicklung (nicht dargestellt), werden sehr große Kurzschlußdrehmomente im Synchrongenerator erzeugt. Diese sehr großen Drehmomentspitzen, die Werte bis zum sechs- bis achtfachen (oder darüber hinaus) des Nenndrehmoments erreichen können, müssen durch die mechanische Konstruktion berücksichtigt werden. Diese mechanische Konstruktion ist bei der in Figur 2 dargestellten Windenergieanlage vom Typ E-40 der Firma Enercon durch eine mechanische Sicherung in Form der Brechbolzenkupplung 8 realisiert. Im Falle eines Generatorkurzschlusses brechen die Bolzen und erlauben ein Mitrotieren des Stators 3 um den Achszapfen 2. Damit wird das übertragene Drehmoment auf das maximal Vierfache des Nenndrehmoments begrenzt. Somit wird im Falle eines Kurzschlusses des Generators die Sicherheit des Antriebsstrangs gewährleistet.

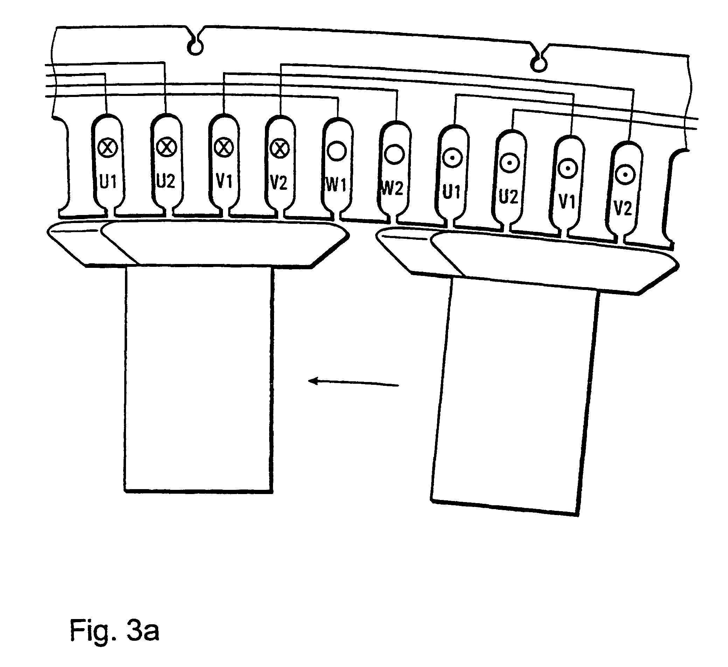

Figur 3a zeigt im Querschnitt einen Teilausriß einer erfindungsgemäßen Synchronmaschine (Synchrongenerator). Hierbei rotiert der Läufer innerhalb des Stators und die Läuferschenkelpolmaschine weist keinen Dämpferkäfig (Dämpferwicklung) und keinen Kurzschlußring auf.

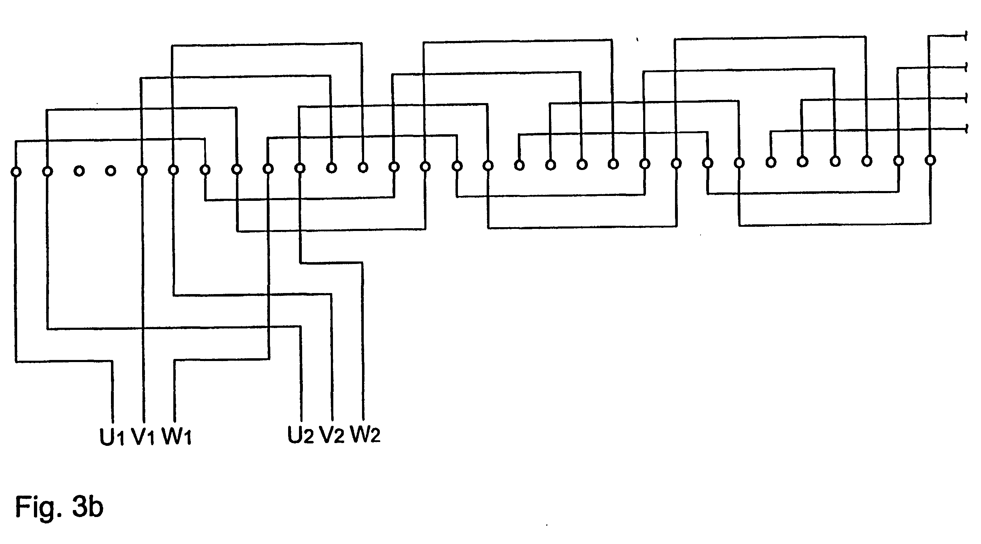

Ferner sind zwei unabhängige Drehstromwicklungen U1, V1, W1 sowie U2, V2, W2 im Stator untergebracht. Die Leistung des Generators wird somit auf beide Drehstromwicklungen (Drehstromsysteme) aufgeteilt, so daß jedes Drehstromsystem nur 50% der Nennleistung zu übernehmen hat. Beide Drehstromsysteme sind um einen elektrischen Winkel von 30° verschoben und somit elektrisch und mechanisch (räumlich) voneinander isoliert. Damit ist aber auch die Reaktanz X_{d} in etwa verdoppelt und somit der Kurzschlußstrom halbiert. Das hat den Vorteil, daß bei einem Kurzschluß in einem Drehstromsystem nur die halbe Kurzschlußleistung auftreten kann. Damit ist eine Reduzierung des maximalen Kurzschlußmomentes (Kurzschluß von zwei Phasen, z.B. U1 und V1) um 50% zur einen Systemanordnung (Stand der Technik) möglich. Figur 3b zeigt in einer besseren Übersicht die Anordnung der einzeinen Phasen der zwei unterschiedlichen Drehstromsysteme über einen größeren Statorbereich.

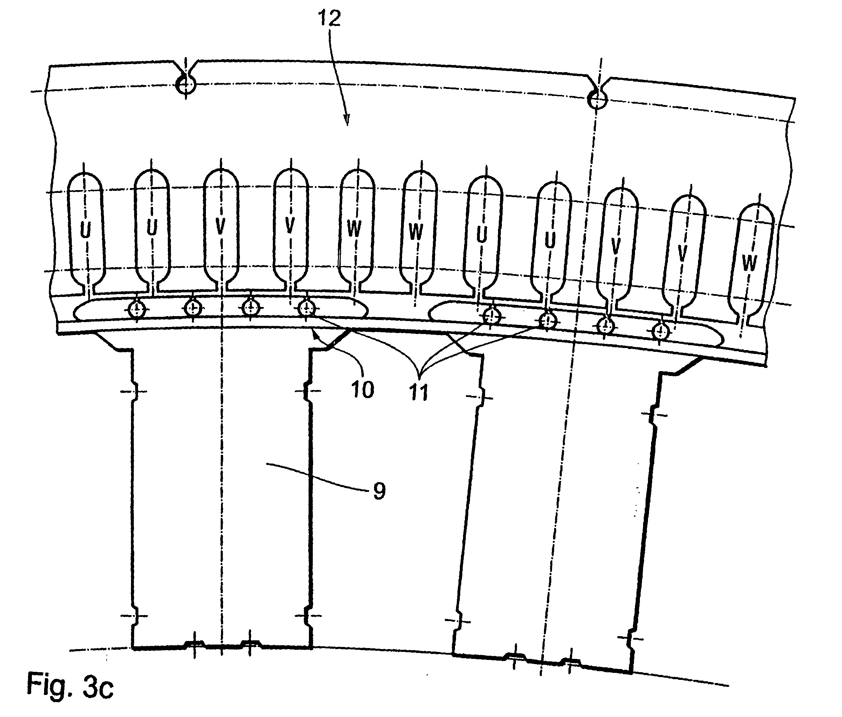

Figur 3c zeigt im Querschnitt einen Teilausriß eines bekannten Synchrongenerators (Synchronmaschine als Vollpolmaschine mit Dämpferkäfig) (Typ E-40), bei dem der Generatorläufer mit Dämpferkäfig ausgestattet ist und die Leistung des Generators von nur einem Drehstromsystem U, V, W aufgenommen wird. Es sind gezeigt: Polkern 9, Kurzschlussring 10, Dämpferstäbe 11, Statorblech 12.

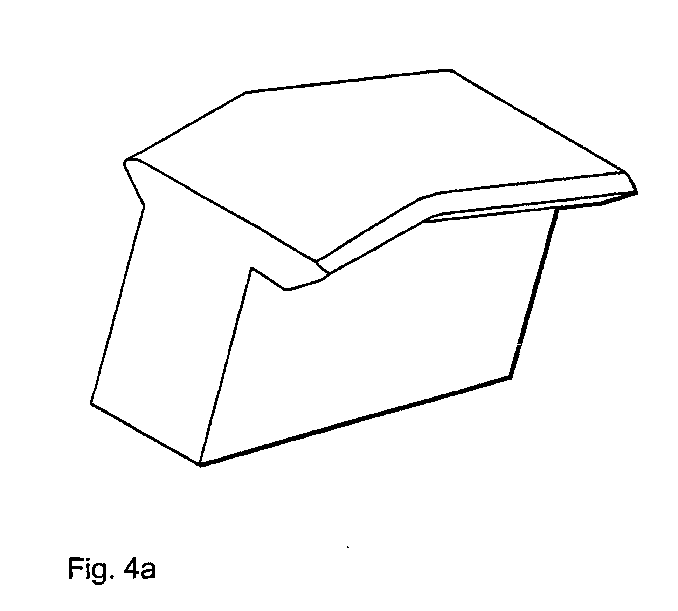

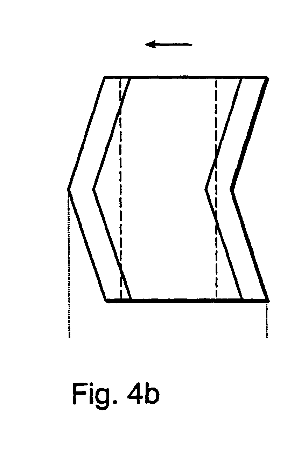

Die Polschuhe bzw. Polköpfe, die auf den Polkernen des Läufers - wie in Figur 3a gezeigt - aufsitzen, sind pfeilförmig ausgebildet, wie dies in Figur 4 dargestellt ist.

Hierbei weist der Polkopf - Figur 4b - in einer Draufsicht auf die dem Luftspalt zugewandten Oberfläche die Form eines Pfeils auf. Die in Bewegungsrichtung des Läufers, die durch einen Pfeil in Figur 3a gekennzeichnet ist, vordere Kante weist zwei winklig zueinander angeordnete, zu einer Spitze zusammenlaufende Kantenabschnitte auf, die in Bezug auf die Bewegungsrichtung des Läufers und somit der Polköpfe schräg angeordnet sind. Die Kantenabschnitte sind in Bezug auf die Bewegungsrichtung des Läufers in einem Winkel von etwa 150° angeordnet. Die in Bewegungsrichtung des Läufers hintere Kante eines Polkopfes weist ebenfalls in Bezug auf die Bewegungsrichtung des Läufers schräg angeordnete Kantenabschnitte auf.

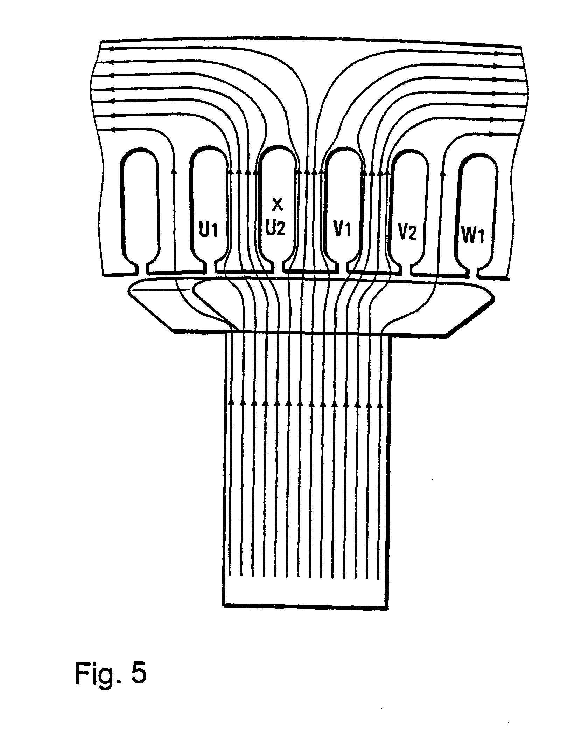

Figur 5 zeigt die Darstellung des magnetischen Flusses im erfindungsgemäßen Generator (Läufer --> Stator) ohne Kurzschluß. Hierbei verläuft der magnetische Fluß auf direktem Wege vom Polkopf zum Stator gleichmäßig zwischen den Nuten.

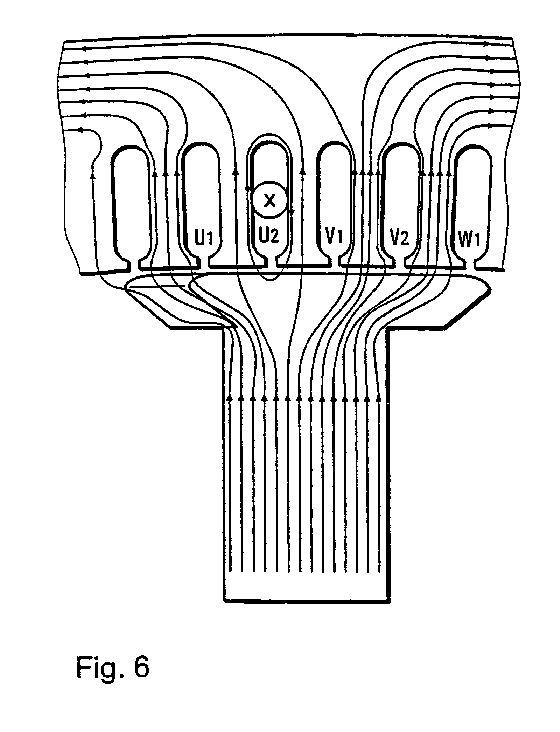

Bei einem Kurzschluß - Figur 6 - in einer Nut - hier gekennzeichnet mit U2 - müssen die magnetischen Feldlinien (magnetischer Fluß φ) ausweichen. Die Pfeilform der Polköpfe erlaubt ein Ausweichen innerhalb des Pols nach rechts und nach links, so daß sich der magnetische Fluß auf weitere benachbarte Nutstege verteilen kann. Durch das Ausweichen des magnetischen Flusses im Erregerpol in Drehrichtung erhält man eine weiche dynamische Entkopplung des Erregerflusses mit dem Statorfluß innerhalb einer Nut. Pro Polbreite fließt der Kurzschlußstrom nur in zwei von insgesamt sechs Nuten. Diese dynamische Entkopplung des Erregerflusses reduziert nochmals das Kurzschlußdrehmoment.

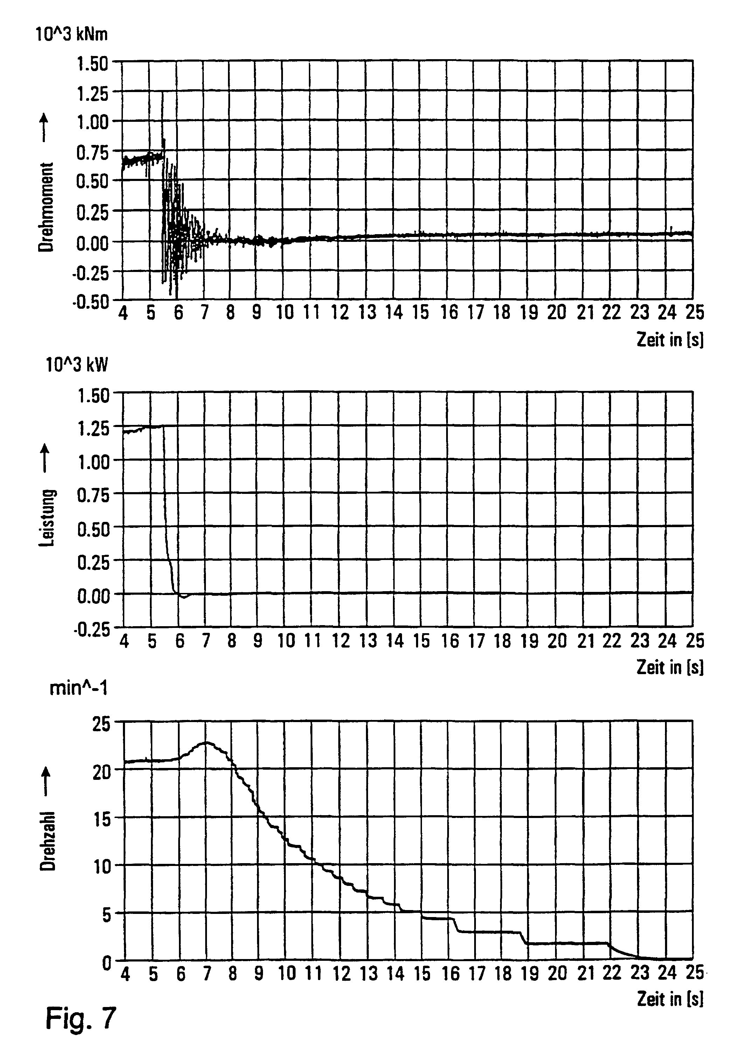

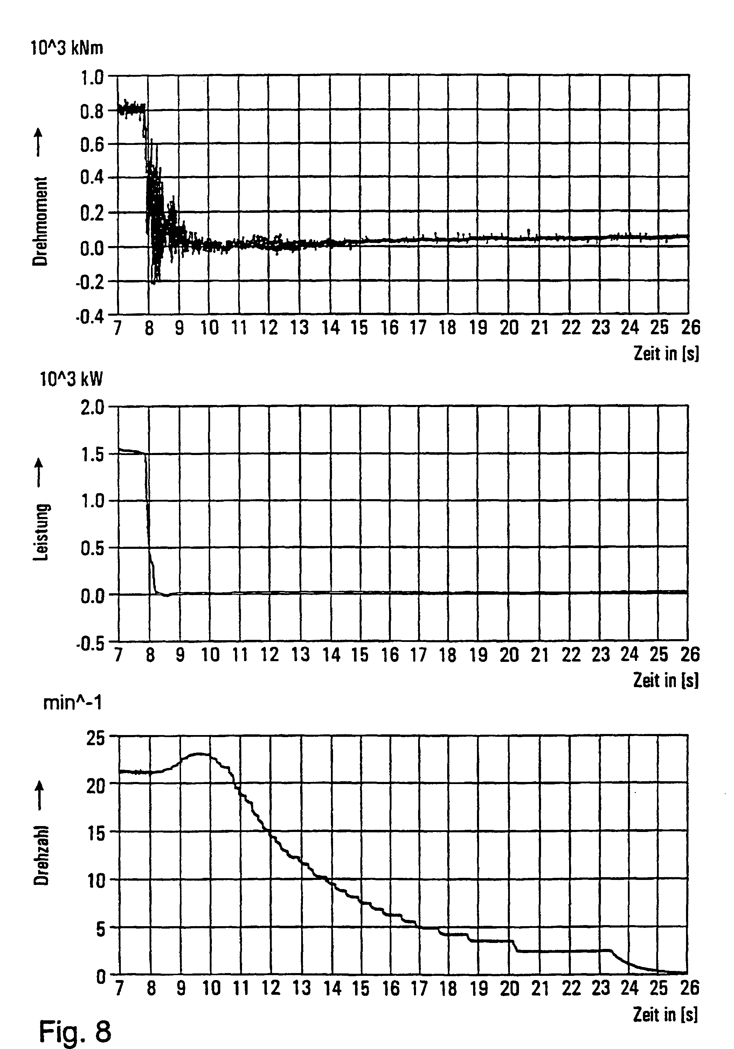

Die Figuren 7 und 8 zeigen Beispiel-Zeitmeßreihen von Rotordrehmoment, Leistung und Drehzahl eines 1,5 MW Synchrongenerators (Typ E-66, Firma Enercon) bei Teillast (1200 kW) und Voll-Last (1500 kW) und künstlich verursachtem Generatorkurzschluß. Die Messungen zeigen, daß das bei allen Betriebszuständen auftretende maximale Drehmoment durch zweiphasigen Generatorkurzschluß deutlich kleiner ist als das Zweifache des Nennmoments.

Wie beschrieben, bewirkt die Kombination von verschiedenen Maßnahmen - wenigstens zwei unabhängige Drehstromsysteme, kein Dämpferkäfig, pfeilförmige Polköpfe - die drastische Verringerung des Kurzschlußmomentes, was insbesondere bei einem Generator zum Einsatz in Windenergieanlagen von sehr großem Vorteil ist. Einhergehend mit der Verringerung des Kurzschlußmoments ist ein vereinfachter Maschinenbau möglich, weil die gesamte Statortragkonstruktion - Figur 1 - erheblich gegenüber bisherigen Lösungen - Figur 2 - vereinfacht werden kann.

## Patentansprüche

1. Windenergieanlage mit einer Synchronmaschine mit einem Läufer und einem Stator, wobei der Stator wenigstens zwei unabhängige Drehstromsysteme aufweist, die elektrisch voneinander isoliert sind, wobei die Synchronmaschine Mittel aufweist, die das Kurzschlußdrehmoment, welches im Falle eines Kurzschlusses an der Statorwicklung auftritt, stets auf das maximal Vierfache des Nenndrehmoments, vorzugsweise auf das Zweifache des Nenndrehmoments, begrenzen.

2. Windenergieanlage nach Anspruch 1,
**dadurch gekennzeichnet, daß** der Läufer keinen Dämpferkäfig bzw. keine Dämpferwicklungen aufweist.

3. Windenergieanlage nach einem der vorhergehenden Ansprüche,
**dadurch gekennzeichnet, daß** das Kurzschlußdrehmoment stets kleiner ist als das Zweifache des Nenndrehmoments.

4. Windenergieanlage nach einem der vorhergehenden Ansprüche,
**dadurch gekennzeichnet, daß** der Läufer im wesentlichen pfeilförmig ausgebildete Polschuhe aufweist.

5. Windenergieanlage mit einer Synchronmaschine, insbesondere nach einem der vorhergehenden Ansprüche,
**dadurch gekennzeichnet, daß** der Läufer und der Stator von einem gemeinsamen Achszapfen getragen werden und der Stator direkt am Achszapfen angeflanscht ist.

6. Windenergieanlage nach einem der vorhergehenden Ansprüche,
**dadurch gekennzeichnet, daß** der Stator von einem Träger gehalten wird, daß der Läufer der Synchronmaschine und der Träger von einem feststehenden Achszapfen aufgenommen werden und daß der Träger und der Achszapfen als eine bauliche Einheit ausgeführt sind.

7. Windenergieanlage nach einem vorhergehenden Ansprüche,
**dadurch gekennzeichnet, daß** die Synchronmaschine ein Synchrongenerator ist und/oder der Statorträger und der Achszapfen als einstückiges Stahlgußbauteil ausgeführt sind.

8. Windenergieanlage nach einem der vorhergehenden Ansprüche,
**dadurch gekennzeichnet, daß** zwischen dem Stator und dem Achszapfen kein mechanisches Sicherungselement ausgebildet ist, welches bei einem Kurzschluß den Stator freigibt.

9. Windenergieanlage nach einem der vorhergehenden Ansprüche,
**dadurch gekennzeichnet, daß** das erste Drehstromsystem um einen (elektrischen) Winkel von etwa 30° zum zweiten Drehstromsystem verschoben ist.

10. Windenergieanlage nach einem der vorhergehenden Ansprüche,
mit einer Leistung von wenigstens 100 kW, bevorzugt mit einer Leistung von 500 kW bis 10 MW.

## Claims

1. Wind energy installation having a synchronous machine with a rotor and a stator, the stator having at least two independent three-phase systems which are electrically isolated from one another, the synchronous machine having means which always limit the short-circuit torque, which acts on the stator winding in the case of a short circuit, to a maximum of four times the rated torque, preferably to twice the rated torque.

2. Wind energy installation according to Claim 1, **characterized in that** the rotor has no damper cage or damper windings.

3. Wind energy installation according to one of the preceding claims, **characterized in that** the short-circuit torque is always less than twice the rated torque.

4. Wind energy installation according to one of the preceding claims, **characterized in that** the rotor has pole shoes which are largely in the form of arrows.

5. Wind energy installation having a synchronous machine, in particular according to one of the preceding claims, **characterized in that** the rotor and the stator are borne by a common shaft journal and the stator is flange-mounted directly on the shaft journal.

6. Wind energy installation according to one of the preceding claims, **characterized in that** the stator is held by a support, **in that** the rotor of the synchronous machine and the support are accommodated by a stationary shaft journal, and **in that** the support and the shaft journal are formed as one structural unit.

7. Wind energy installation according to one of the preceding claims, **characterized in that** the synchronous machine is a synchronous generator and/or the stator support and the shaft journal are in the form of an integral cast-steel component.

8. Wind energy installation according to one of the preceding claims, **characterized in that** no mechanical securing element, which releases the stator in the event of a short circuit, is formed between the stator and the shaft journal.

9. Wind energy installation according to one of the preceding claims, **characterized in that** the first three-phase system is shifted with respect to the second three-phase system through an (electrical) angle of approximately 30°.

10. Wind energy installation according to one of the preceding claims having a power of at least 100 kW, preferably having a power of 500 kW to 10 MW.

## Revendications

1. Dispositif de conversion d'énergie éolienne avec une machine synchrone dotée d'un rotor et d'un stator, moyennant quoi, le stator comporte au moins deux systèmes de rotation indépendants qui sont isolés électriquement l'un de l'autre, moyennant quoi, la machine synchrone comporte des moyens qui limitent le couple de court-circuit qui se produit en cas de court-circuit sur l'enroulement du stator, en permanence au maximum au quadruple du couple nominal, de préférence, au double du couple nominal.

2. Dispositif de conversion d'énergie éolienne selon la revendication 1, **caractérisé en ce que** le rotor ne comporte pas de cage amortissante ou d'enroulement amortisseur.

3. Dispositif de conversion d'énergie éolienne selon l'une quelconque des revendications précédentes, **caractérisé en ce que** le couple de court-circuit est en permanence inférieur au double du couple nominal.

4. Dispositif de conversion d'énergie éolienne selon l'une quelconque des revendications précédentes, **caractérisé en ce que** le rotor comporte une pièce polaire réalisée essentiellement en forme de flèche.

5. Dispositif de conversion d'énergie éolienne avec une machine synchrone, en particulier, selon l'une quelconque des revendications précédentes, **caractérisé en ce que** le rotor et le stator sont portés par un tourillon commun et le stator est bridé directement sur le tourillon.

6. Dispositif de conversion d'énergie éolienne selon l'une quelconque des revendications précédentes, **caractérisé en ce que** le stator est retenu par un support, le rotor de la machine synchrone et le support sont recueillis par un tourillon à demeure et le support et les tourillons sont réalisés en tant qu'unité de construction.

7. Dispositif de conversion d'énergie éolienne selon l'une quelconque des revendications précédentes, **caractérisé en ce que** la machine synchrone est un générateur synchrone et/ou le support de stator et le tourillon sont réalisés en tant que composant de construction en acier moulé monobloc.

8. Dispositif de conversion d'énergie éolienne selon l'une quelconque des revendications précédentes, **caractérisé en ce que** entre le stator et le tourillon aucun élément de sécurité n'est réalisé qui libère le stator lors d'un court-circuit.

9. Dispositif de conversion d'énergie éolienne selon l'une quelconque des revendications précédentes, **caractérisé en ce que** le premier système de courant rotatoire est déplacé d'un angle (électrique) d'environ 30° au second système de courant rotatoire.

10. Dispositif de conversion d'énergie éolienne selon l'une quelconque des revendications précédentes, avec une puissance d'au moins 100 kW, de préférence, avec une puissance de 500 kW à 10 MW.
